# FASCICULE DE BREVET EUROPEEN

(11) **EP 1 071 873 B1**
(45) Date de publication et mention de la délivrance du brevet: **12.06.2002**
(21) Numéro de dépôt: 99913419.0
(22) Date de dépôt: 15.04.1999
(51) Int. Cl.: F02D 33/02, B60T 17/02

(54) **PROCEDE ET DISPOSITIF DE COMMANDE DE LA DEPRESSION REGNANT DANS LE COLLECTEUR D'ADMISSION D'UN MOTEUR A COMBUSTION INTERNE**
VERFAHREN UND VORRICHTUNG ZUR STEUERUNG DES UNTERDRUCKS IM ANSAUGROHR EINER BRENNKRAFTMASCHINE
METHOD AND DEVICE FOR CONTROLLING VACUUM PREVAILING IN AN INTERNAL COMBUSTION ENGINE INTAKE MANIFOLD

(30) Priorité: 17.04.1998 FR 9804820
(43) Date de publication de la demande: 31.01.2001
(73) Titulaire: RENAULT, 92109 Boulogne-Billancourt (FR)
(72) Inventeur: LEROUX, Jean-François, 92500 Rueil Malmaison (FR); VUILLERMOZ, Guillaume, F-92380 Garches (FR)
(86) Numéro de dépôt international: FR9900888
(87) Numéro de publication internationale: WO9954613

(56) Documents cités:
- EP-A- 0 816 196
- EP-A- 0 829 629
- EP-A- 0 833 044
- PATENT ABSTRACTS OF JAPAN vol. 017, no. 652 (M-1520), 3 décembre 1993 (1993-12-03) & JP 05 213182 A (DAIHATSU MOTOR CO LTD), 24 août 1993 (1993-08-24)
- PATENT ABSTRACTS OF JAPAN vol. 096, no. 010, 31 octobre 1996 (1996-10-31) & JP 08 164840 A (TOYOTA MOTOR CORP), 25 juin 1996 (1996-06-25) cité dans la demande

## Description

La présente invention est relative à un procédé et à un dispositif de commande de la dépression régnant dans le collecteur d'admission d'un moteur à combustion interne propulsant un véhicule automobile et, plus particulièrement, à un tel procédé et à un tel dispositif conçus pour un véhicule automobile équipé d'un dispositif de freinage assisté par ladite dépression et commandé par pédale, le moteur pouvant fonctionner soit en mélange air/carburant pauvre soit en mélange plus riche.

On a conçu et réalisé de tels moteurs à combustion interne pour le but de réduire la consommation de ces moteurs et la pollution de l'air ambiant par les gaz d'échappement, lorsque ceux-ci fonctionnent en mélange air/carburant dit "pauvre", c'est-à-dire présentant une richesse R en carburant inférieure à celle correspondant à la stoechiométrie, pour laquelle R = 1 (voir par exemple EP-A-816196, EP-A-829629). Un tel mode de fonctionnement convient plus particulièrement quand le couple demandé par le conducteur du véhicule est relativement faible, en particulier lorsque la vitesse du véhicule est basse. Lorsque le couple demandé est plus élevé, à plus grande vitesse du véhicule par exemple, la richesse du mélange peut être accrue, par exemple jusqu'à R = 1, pour permettre la fourniture du couple demandé.

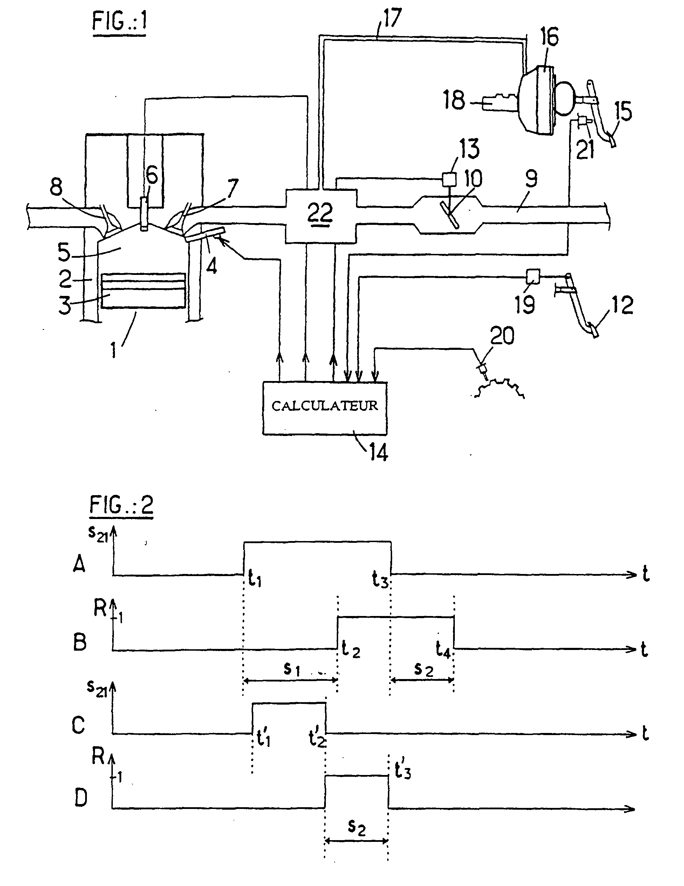

On a représenté schématiquement à la figure 1 du dessin annexé un moteur à combustion interne 1 de ce type et des moyens de commande qui lui sont associés lorsqu'il sert à propulser un véhicule automobile. Le moteur 1 est représenté schématiquement par l'un de ses cylindres référencé 2 muni d'un piston 3, d'un injecteur de carburant 4 débouchant directement dans une chambre de combustion 5, d'une bougie d'allumage 6, d'une soupape d'admission 7 et d'une soupape d'échappement 8.

L'air est aspiré par un conduit 9 dans lequel est interposé un papillon des gaz 10. Celui-ci peut être directement commandé par une pédale d'accélérateur 12 ou, comme représenté, par l'intermédiaire d'un moteur électrique 13, lui-même commandé par un calculateur électronique numérique 14.

Classiquement encore, le véhicule est équipé d'un dispositif de freinage commandé par une pédale de frein 15 et assisté par un amplificateur pneumatique 16 d'un type bien connu, raccordé au collecteur d'admission du moteur 1, en aval du papillon 10, par un conduit 17, à travers un clapet anti-retour (non représenté) empêchant un reflux d'air dans l'amplificateur 16. La dépression régnant dans le collecteur d'admission du moteur permet d'amplifier l'effort de freinage exercé sur la pédale 15 par le conducteur, effort qui accroît la pression d'un liquide de freinage contenu dans un circuit hydraulique (non représenté) raccordé à un maître-cylindre 18 adjacent à l'amplificateur 16.

Le calculateur 14 est dûment programmé pour gérer le fonctionnement du moteur de manière que celui-ci délivre le couple demandé par le conducteur, connu du calculateur par une mesure de l'enfoncement α de la pédale d'accélérateur 15, délivré par un capteur potentiométrique 19, dans le respect de relations qui lient l'angle d'avance à l'allumage du mélange air/carburant et le temps d'ouverture de l'injecteur 4 à divers paramètres tels que la pression ou le débit d'air dans le collecteur d'admission du moteur, le régime du moteur, la température de l'air ambiant, celle du liquide de refroidissement du moteur, etc., etc..., comme cela est bien connu de l'homme de métier.

Dans le cas d'un moteur fonctionnant en mélange pauvre, on sait que la pression qui s'établit alors dans le collecteur d'admission est peu différente de la pression atmosphérique et que, par conséquent, l'assistance fournie par l'amplificateur pneumatique 16 est faible, ce qui est dommageable du double point de vue de la sécurité du véhicule et du confort de conduite.

Pour pallier cet inconvénient, on propose dans la demande de brevet japonais JP 08164840 de mesurer la pression d'assistance communiquée à l'amplificateur pneumatique 16 et de commander une fermeture du papillon des gaz 10 si la pression mesurée est inférieure à une valeur de seuil prédéterminée. La fermeture du papillon a pour effet d'accroître la dépression dans le collecteur d'admission et donc de rendre l'assistance au freinage développée par l'amplificateur pneumatique 16 plus efficace. La richesse du mélange air/carburant admis dans le moteur est alors réglée en conséquence du débit d'air admis dans le moteur.

Cette solution présente deux inconvénients. D'une part elle exige la présence d'un capteur de pression dans le dispositif pneumatique d'assistance du freinage, ce qui est coûteux, et, d'autre part, elle peut conduire à des richesses du mélange air/carburant supérieures à 1, ce qui est défavorable du double point de vue de la consommation du moteur et de la pollution de l'environnement.

La présente invention a précisément pour but de fournir un procédé, et de réaliser un dispositif, de commande de la dépression régnant dans le collecteur d'admission d'un moteur à combustion interne du type décrit ci-dessus, qui ne présentent aucun des deux inconvénients précités.

On atteint ces buts de l'invention, ainsi que d'autres qui apparaîtront à la lecture de la description qui va suivre, avec un procédé de commande de la dépression régnant dans le collecteur d'admission d'un moteur à combustion interne propulsant un véhicule automobile équipé d'un àispositif de freinage assisté par ladite dépression et commandé par pédale, le moteur pouvant fonctionner soit en mélange air/carburant pauvre soit en mélange plus riche, ce procédé étant remarquable en ce que, lors d'un fonctionnement en mélange pauvre, a) on détecte un actionnement de la pédale de frein et on mesure le temps qui s'écoule depuis cet actionnement, et b) dès que la durée de l'actionnement se prolonge au-delà d'un seuil prédéterminé, on commande un passage du fonctionnement du moteur en mélange plus riche, pour renforcer ladite dépression.

Grâce à la présente invention, comme on le verra plus loin en détail, on assure ainsi une assistance suffisante au freinage, sans mesure de la pression d'air d'assistance et sans que la richesse du mélange ne passe au-dessus de celle correspondant à la stoechiométrie.

Suivant la présente invention, encore, si la pédale de frein cesse d'être actionnée avant l'écoulement dudit seuil de durée prédéterminée, on commande aussi un passage du fonctionnement du moteur en mélange plus riche. On rétablit le fonctionnement du moteur en mélange pauvre à la fin d'un intervalle de temps de durée prédéterminée, mesurée à partir de la cessation de l'actionnement de la pédale de frein.

D'autres caractéristiques et avantages de la présente invention apparaîtront à la lecture de la description qui va suivre et à l'examen du dessin annexé dans lequel :
- la figure 1 est une représentation schématique d'un moteur à combustion interne susceptible de fonctionner en mélange pauvre et propulsant un véhicule automobile équipé d'un dispositif de freinage assisté susceptible de fonctionner suivant les enseignements de la présente invention, les parties classiques de ce moteur à combustion interne et ses équipements périphériques ayant déjà été décrits en préambule de la présente description,
- la figure 2 représente plusieurs graphes utiles à la description du procédé suivant la présente invention, et
- la figure 3 est un organigramme d'un programme permettant de mettre en oeuvre le procédé suivant la présente invention.

On revient brièvement sur le schéma de la figure 1 pour signaler la présence de deux détecteurs délivrant des signaux supplémentaires au calculateur 14, le procédé suivant l'invention faisant usage de ces deux signaux. Il s'agit d'une part d'un détecteur 20 de la vitesse du véhicule, constitué classiquement par un capteur à réluctance magnétique placé en face d'une roue dentée, par exemple, et, d'autre part, d'un détecteur 21 délivrant au calculateur 14 un signal quand le conducteur du véhicule appuie sur la pédale de frein 15. L'ensemble des moyens schématisés sur la figure 1 constitue un dispositif permettant la mise en oeuvre du procédé suivant l'invention.

On se réfère maintenant à la figure 2 pour décrire le principe qui est à la base de la présente invention. On a représenté en A et B respectivement, le signal de sortie s₂₁ du détecteur 21 de position de la pédale de frein 15 et l'évolution parallèle, dans le temps, de la richesse R du mélange air/carburant d'alimentation du moteur telle que cette richesse est commandée, suivant l'invention, par le calculateur 14. A l'instant t₁ (graphe A), le signal s₂₁ passe à un niveau haut pour signaler que le conducteur appuie sur la pédale de frein, alors que la richesse du mélange (graphe B) est à un niveau bas correspondant à un mélange pauvre, du type stratifié ou homogène, par exemple. Des moyens de commande sont incorporés au calculateur 14 pour fixer la consigne de richesse du mélange air/carburant suivant la présente invention. Ces moyens de commande sont essentiellement des moyens logiciels associés aux autres moyens de ce type classiquement installés dans le calculateur 14.

Ces moyens logiciels comprennent ainsi des moyens pour mesurer la durée d'actionnement de la pédale de frein, à compter de l'instant t₁, et pour comparer cette durée à un seuil prédéterminé s₁, considéré comme correspondant à une durée d'actionnement de la pédale de frein propre à réduire la vitesse du véhicule automobile à la valeur souhaitée par le conducteur, dans le délai attendu par celui-ci.

Si la pédale de frein reste comprimée pendant un intervalle de temps plus long que s₁ = t₂ - t₁, le calculateur 14 relève, dès l'instant t₂, la consigne de la richesse du mélange air/carburant à une valeur supérieure à celle correspondant au mélange pauvre, étant entendu que ce relèvement entraîne un relèvement concomitant de la dépression du collecteur d'admission, propre à accroître l'assistance de cette dépression dans le freinage du véhicule, et donc propre à maintenir le niveau de l'effort exercé sur la pédale de frein à une valeur convenable. Le mélange plus riche ainsi réglé peut être à la richesse R = 1, correspondant à un mélange stoechiométrique homogène, par exemple.

Le calculateur 14 commande simultanément l'angle d'ouverture du papillon 10 par l'intermédiaire du moteur 13 pour assurer la conservation du couple demandé.

Le conducteur cesse ensuite d'appuyer sur la pédale de frein à l'instant t₃. La richesse du mélange air/carburant n'est cependant pas ramenée simultanément à la valeur correspondant au mélange pauvre. Suivant l'invention, on maintient la richesse R = 1 pendant un intervalle de temps s₂ = t₄ - t₃ de durée prédéterminée, propre à assurer l'efficacité d'un coup de pédale de frein éventuel suivant.

Les graphes C,D de la figure 2 sont analogues aux graphes A et B respectivement et correspondent à une situation dans laquelle, lors d'un freinage, le conducteur appuie sur la pédale 15 pendant un intervalle de temps t'₂ - t'₁ d'une durée inférieure au seuil s₁ évoqué ci-dessus. Cela signifie que la dépression disponible au collecteur d'admission pour assister le freinage du véhicule était qlors suffisante pour ralentir le véhicule conformément à l'attente du conducteur, dans un temps suffisamment court. Point n'est besoin, en principe, de relever la richesse du mélange air/carburant pour accroitre la dépression disponible.

Avantageusement, cependant, suivant la présente invention, on relève tout de même cette richesse à la richesse R = 1 pendant l'intervalle de temps s₂ mentionné ci-dessus, et pour les mêmes raisons, à savoir assurer l'efficacité du prochain coup de pédale de frein.

Il apparaît maintenant clairement que la stratégie de commande de la dépression dans le collecteur d'admission du moteur conforme à la présente invention se distingue nettement de celle décrite dans la demande de brevet japonais JP 08164840 précitée en ce qu'elle permet avantageusement de ne pas faire appel à une mesure de pression dans le circuit pneumatique d'assistance (par exemple dans la réserve de vide 22 du dispositif de la figure 1). Suivant l'invention, on passe à la richesse R = 1 (par exemple) à chaque freinage selon une stratégie qui tient compte de la durée du freinage et non de ladite pression.

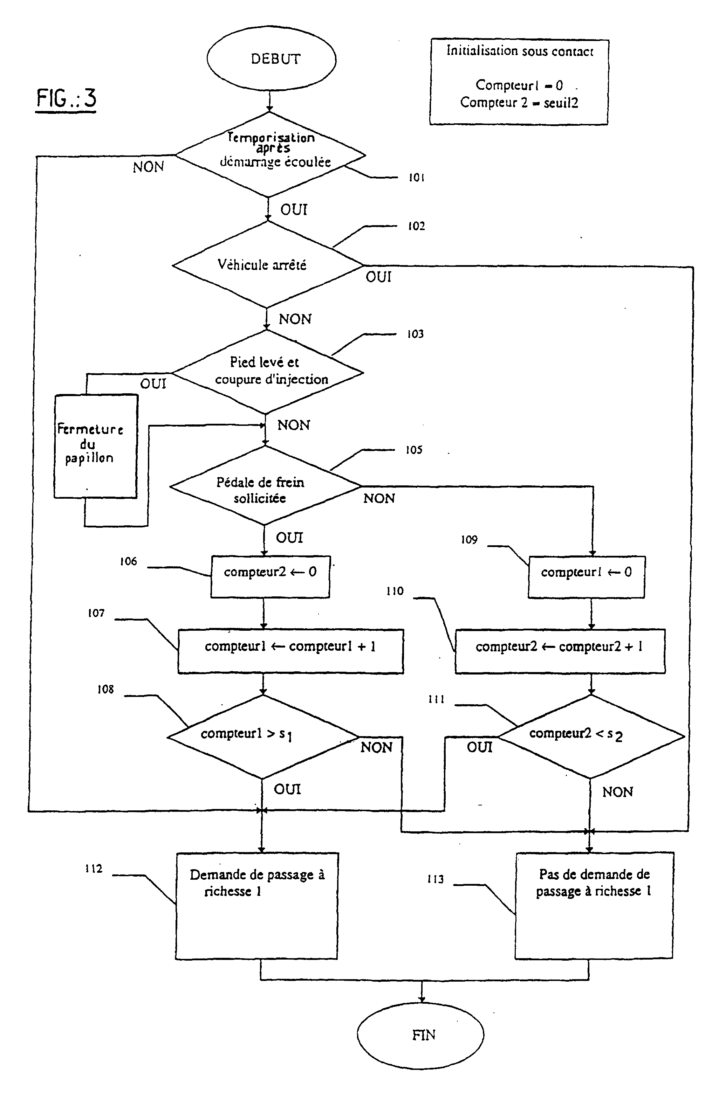

On se réfère maintenant à l'organigramme de la figure 3 pour décrire la stratégie suivant l'invention en plus de détails . Cet organigramme est celui d'une tâche, ou "routine", exécutée périodiquement par le calculateur 14, par exemple tous les 10 millisecondes. Le sous-programme d'exécution de cette tâche commence par une initialisation à zéro et à la valeur s₂ de premier et deuxième compteurs, respectivement, présents dans le calculateur 14, pour des buts qui sont décrits plus loin. Cette initialisation peut s'opérer, par exemple, à la mise sous contact électrique du démarreur du moteur du véhicule.

A l'étape 101, on compare le temps qui s'est écoulé depuis le démarrage du moteur du véhicule, à une temporisation de durée prédéterminée s₃, par exemple s₃ = 3 s. Des moyens d'horloge, normalement incorporés au calculateur, assurent la mesure de temps nécessaire. Si l'on n'est pas sorti de cette temporisation, c'est que le moteur est encore en phase de démarrage. On fixe alors la richesse à R = 1 (étape 112) pour obtenir une dépression dans l'assistance qui soit suffisante pour un freinage éventuel.

Si par contre le temps écoulé est plus long que ladite temporisation s₃, on passe à l'étape 102 où l'on examine le signal issu du capteur de vitesse 20, pour savoir si le véhicule est à l'arrêt ou non. S'il l'est, point n'est besoin d'accroître l'assistance et donc de passer à la richesse R = 1 (étape 113). S'il ne l'est pas, on examine (étape 103) le niveau du signal de sortie du capteur 19 sensible à la position de la pédale d'accélérateur 12. Si ce niveau est représentatif d'une position "pied levé" de cette pédale, et que le calculateur 14 a coupé l'alimentation de l'injecteur 4, comme c'est le cas notamment quand le conducteur débraye l'embrayage du moteur du véhicule pour commander un changement de rapport dans une boîte de vitesses associée au moteur, on commande (étape 104) le moteur électrique 13 pour qu'il ferme le papillon 10 de manière à établir une dépression maximale dans le collecteur d'admission du moteur, en vue d'un éventuel freinage assisté par cette dépression.

A l'étape 105, on examine le niveau du signal de sortie s₂₁ du capteur 21 pour savoir si le conducteur actionne ou non la pédale de frein 15. Dans l'affirmative, le deuxième compteur (compteur 2) évoqué ci-dessus est chargé avec la valeur 0 (étape 106) et le premier compteur (compteur 1) est incrémenté d'une unité (étape 107). A l'étape 108, on compare le compte contenu dans le compteur 1 au seuil s₁ évoqué ci-dessus. Si le seuil est dépassé (comme c'est le cas à l'instant t₂, graphe B de la figure 2), un renforcement de l'assistance est nécessaire pour assurer la fin du freinage. Le calculateur fixe alors la richesse de consigne à R = 1 (étape 112). Si le seuil n'est pas atteint, c'est que l'on est encore à l'intérieur de l'intervalle de temps (t₂ - t₁) du graphe A de la figure 2, pendant lequel on n'augmente pas la richesse de consigne du mélange air/carburant (étape 113).

Dès que le conducteur cesse de solliciter la pédale de frein 15, la réponse au test de l'étape 105 devient négative et le programme se poursuit alors par une branche passant par les étapes 109,110 et 111. Le compteur 1 est remis à zéro (étape 109), le compteur 2 est incrémenté (étape 110) et son contenu est comparé à un compte représentatif de l'intervalle de temps s₂ évoqué ci-dessus (étape 111). Aussi longtemps que ce compte s₂ n'est pas atteint, on reste à la richesse R = 1 (étape 112) comme illustré sur les graphes B et D de la figure 2.

A la suite d'un certain nombre de bouclage du programme par la branche 109,110,111, le compte du compteur 2 finit par dépasser s₂ et le calculateur 14 ramène alors la richesse de consigne à celle correspondant au mélange pauvre (étape 110), la dépression au collecteur d'admission ayant été remontée sensiblement au niveau atteint avant le freinage intervenant entre t₁ et t₃ au graphe A de la figure 2, ou entre t'₁ et t'₂ au graphe C de cette même figure, ce qui assure l'efficacité d'une éventuelle nouvelle action du conducteur sur la pédale de frein 15.

## Revendications

1. Procédé de commande de la dépression régnant dans le collecteur d'admission d'un moteur à combustion interne (1) propulsant un véhicule automobile équipé d'un dispositif de freinage assisté par ladite dépression et commandé par une pédale (15), le moteur (1) pouvant fonctionner soit en mélange air/carburant pauvre soit en mélange plus riche, **caractérisé en ce que**, lors d'un fonctionnement en mélange pauvre :
a) on détecte un actionnement de la pédale de frein (15) et on mesure le temps qui s'est écoulé depuis cet actionnement, et
b) dès que la durée de l'actionnement se prolonge au-delà d'un seuil (s₁) prédéterminé, on commande un passage du fonctionnement du moteur (1) en mélange plus riche, pour renforcer ladite dépression.

2. Procédé conforme à la revendication 1, **caractérisé en ce que**, si la pédale de frein (15) cesse d'être actionnée avant l'écoulement dudit seuil de durée prédéterminé (s₁), on commande un passage du fonctionnement du moteur (1) en mélange plus riche.

3. Procédé conforme à l'une quelconque des revendications 1 et 2, **caractérisé en ce qu'**on rétablit le fonctionnement du moteur (1) en mélange pauvre dès la fin d'un intervalle de temps de durée prédéterminé (s₂), mesuré à partir de la cessation de l'actionnement de la pédale de frein (15).

4. Procédé conforme à l'une quelconque des revendications 1 à 3, **caractérisé en ce que** ledit mélange air/carburant plus riche est de richesse R = 1.

5. Procédé conforme à l'une quelconque des revendications 1 à 4, **caractérisé en ce qu'**on mesure l'intervalle de temps écoulé depuis un démarrage du véhicule et **en ce qu'**on commande un fonctionnement du moteur(1) en mélange plus riche si ledit intervalle de temps est inférieur à une temporisation (s₃) prédéterminée.

6. Procédé conforme à la revendication 5, **caractérisé en ce que**, si ledit intervalle de temps est supérieur à ladite temporisation (s₃) et que le véhicule est à l'arrêt, on maintient le fonctionnement du moteur (1) en mélange pauvre.

7. Procédé conforme à la revendication 6, **caractérisé en ce que**, si le véhicule n'est pas à l'arrêt et qu'on détecte un passage en position "pied levé" d'une pédale d'accélérateur (12) de commande du moteur (1) et une coupure de l'injection de carburant dans ledit moteur, on commande la fermeture d'un papillon des gaz (10) disposé en amont du collecteur d'admission du moteur (1).

8. Dispositif pour la mise en oeuvre du procédé conforme à l'une quelconque des revendications 1 à 4, **caractérisé en ce qu'**il comprend a) un détecteur (21) d'actionnement de la pédale de frein (15), b) des moyens pour mesurer la durée d'actionnement de ladite pédale (12) et c) des moyens de commande (14) du fonctionnement du moteur (1) sensibles, lors d'un fonctionnement dudit moteur (1) en mélange pauvre, à un dépassement d'un seuil prédéterminé (s₁) par ladite durée d'actionnement, pour commander un passage du fonctionnement du moteur (1) en mélange plus riche.

9. Dispositif conforme à la revendication 8, **caractérisé en ce que** lesdits moyens de commande (14) comprennent des moyens de mesure du temps écoulé depuis un démarrage du véhicule, lesdits moyens de commande commutant le fonctionnement du moteur (1) en mélange plus riche si ledit intervalle de temps est inférieur à une temporisation prédéterminée (s₃).

10. Dispositif conforme à la revendication 9, **caractérisé en ce qu'**il comprend des moyens (19) pour détecter l'arrivée en position "pied levé" d'une pédale d'accélérateur (12) de commande du moteur (1), des moyens de détection d'une coupure d'injection de carburant dans le moteur, lesdits moyens de commande (14) étant sensibles à la détection de cette position et de cette coupure pour commander la fermeture d'un papillon des gaz (10) monté en amont du collecteur d'admission dudit moteur (1).

## Patentansprüche

1. Verfahren zum Steuern des Unterdrucks, der im Ansaugstutzen eines ein Fahrzeug antreibenden Verbrennungsmotors (1) herrscht, wobei das Fahrzeug mit einer vom besagten Unterdruck gesteuerten unterstützten Bremsvorrichtung ausgerüstet ist und von einem Hebel (15) bedient wird, wobei der Motor (1) entweder mit einer armen Mischung Luft/Kraftstoff oder mit einer reichen Mischung Luft/Kraftstoff funktionieren kann, **dadurch gekennzeichnet, dass**, bei einem Betrieb mit armem Gemisch:
a) man eine Betätigung des Bremspedals (15) entdeckt und die Zeit misst, die seit dieser Betätigung verstrichen ist und
b) sobald sich die Dauer der Betätigung über einen vorbestimmten Grenzwert (s₁) hinaus fortsetzt, ein Übergang des Betreiben des Motors (1) in ein reicheres Gemisch gesteuert wird um den besagten Unterdruck zu verstärken.

2. Verfahren nach Anspruch 1, **dadurch gekennzeichnet, dass**, wenn das Bremspedal (15) vor Ablauf der besagten vorbestimmten Grenzzeitdauer (s₁) aufhört bedient zu werden, zu einem Betrieb des Motors (1) mit einem reicheren Gemisch übergegangen wird.

3. Verfahren nach irgendeinem der vorangehenden Ansprüche 1 and 2, **dadurch gekennzeichnet,**
**dass** der Betrieb des Motors (1) mit einem armen Gemisch wieder am Ende eines vorbestimmten Zeitintervalls (s₂) aufgenommen wird , welches ab dem Ende der Betätigung des Bremspedals (15) gemessen wird.

4. Verfahren nach irgendeinem der vorangehenden Ansprüche1 bis 3, **dadurch gekennzeichnet,**
**dass** das besagte reichere Gemisch Luft/Kraftstoff die Ergiebigkeit R=1 aufweist.

5. Verfahren nach irgendeinem der vorangehenden Ansprüchel bis 4, **dadurch gekennzeichnet, dass** man das seit dem Anlassen des Fahrzeugs verstrichene Zeitintervall misst und dass man einen Betrieb des Motors (1) mit reicherem Gemisch steuert wenn das besagte Zeitintervall kleiner ist als eine vorbestimmte Verzögerungszeit (s3).

6. Verfahren nach Anspruch 5, **dadurch gekennzeichnet, dass**, wenn das besagte Zeitintervall größer ist als die besagte Verzögerungszeit (s₃) und das Fahrzeug angehalten ist, der Betrieb des Motors (1) mit armen Gemisch beibehalten bleibt.

7. Verfahren nach Anspruch 6, **dadurch gekennzeichnet, dass**, wenn das Fahrzeug nicht angehalten ist, und ein Übergang zur Stellung "gehobener Fuß" eines Gaspedals (12) zur Steuerung des Motors (1) und eine Unterbrechung der Einspritzung des Kraftstoffes in besagten Motor (1), festgestellt wird, das Schließen eines oberhalb des Ansaugstutzens des Motors (1) angeordneten Gasschiebers gesteuert wird.

8. Vorrichtung zur Durchführung des irgendeinem der Anspruche 1 bis 4 konformen Verfahrens , **dadurch gekennzeichnet, dass** sie folgendes aufweist:: a) einen Bedienungs-Detektor (21) des Bremspedals (15), b) Mittel zum Messen der Bedienungsdauer des besagten Pedals (12) und c) Steuermittel (14) für den Betrieb des Motors, welche während des Betriebs besagten Motors sensibel auf ein Überschreiten eines vorgegebenen Grenzwertes (s₁) durch besagte Bedienungsdauer reagieren, um einen Übergang des Betriebs des Motors (1) zu einem reicheren Gemisch zu steuern.

9. Vorrichtung nach Anspruch 8, **dadurch gekennzeichnet, dass** besagte Steuermittel (14) Messmittel für die verstrichene Zeit seit dem Anlassen des Fahrzeugs aufweisen, wobei die besagten Mittel den Betrieb des Motors (1) in reicheres Gemisch umschalten, wenn besagtes Zeitintervall kleiner als eine vorgegebene Verzögerungszeit (s₃) ist.

10. Vorrichtung nach Anspruch 9, **dadurch gekennzeichnet, dass** sie Mittel (19) zum Erfassen der Ankunft an der Stellung "gehobener Fuß" eines Gaspedals (12) zur Steuerung des Motors (1), Mittel, die die Unterbrechung der Kraftstoffeinspritzung in den Motor erfassen, wobei die besagten Steuermittel (14) sensibel auf die Erfassung dieser Stellung und dieser Unterbrechung sind, um das Schließen eines oberhalb des Ansaugstutzens besagten Motors (1) montierten Gasschiebers (10) zu steuern.

## Claims

1. A method for the control of the underpressure in the intake manifold of an internal combustion engine (1) driving an automobile vehicle fitted with a braking device assisted by this underpressure and controlled by a pedal (15), in which the engine (1) can operate either with a lean air-fuel mixture or with a richer mixture, **characterised in that**, during operation with a lean mixture,
a) an actuation of the brake pedal (15) is detected and the time that has elapsed since this actuation is measured, and
b) as soon as the duration of the actuation exceeds a predetermined threshold (s₁), the operation of the engine (1) is switched to a richer mixture in order to reinforce this underpressure.

2. A method as claimed in claim 1, **characterised in that**, if the brake pedal (15) ceases to be actuated before the threshold of predetermined duration (s₁) has elapsed, the operation of the engine (1) is switched to a richer mixture.

3. A method as claimed in any one of claims 1 and 2, **characterised in that** the engine (1) is returned to operation with the lean mixture from the end of a time interval of predetermined duration (s₂) measured from the cessation of the actuation of the brake pedal (15).

4. A method as claimed in any one of claims 1 to 3, **characterised in that** the richer air-fuel mixture is of a richness R = 1.

5. A method as claimed in any one of claims 1 to 4, **characterised in that** the time interval that has elapsed since starting of the vehicle is measured and **in that** the operation of the engine (1) with the richer mixture is controlled if the time interval is lower than a predetermined timing (s₃).

6. A method as claimed in claim 5, **characterised in that** if the time interval is greater than the timing (s₃) and the vehicle is stationary, the operation of the engine (1) continues with the lean mixture.

7. A method as claimed in claim 6, **characterised in that** if the vehicle is not stationary and the transition to a position in which the foot is lifted from the accelerator pedal (12) for the control of the engine (1) and a discontinuation of the injection of fuel into the engine is detected, the closure of a gas throttle valve (10) disposed upstream of the intake manifold of the engine (1) is controlled.

8. A device for the application of the method as claimed in any one of claims 1 to 4, **characterised in that** it comprises a) a detector (21) of the actuation of the brake pedal (15), b) means for measuring the duration of actuation of the brake pedal (12) and c) means for controlling (14) the operation of the engine (1) sensitive, during operation of the engine (1) with a lean mixture, to the predetermined threshold (s₁) being exceeded by the duration of actuation, in order to control the transition of the operation of the engine (1) to a richer mixture.

9. A device as claimed in claim 8, **characterised in that** the control means (14) comprise means for measuring the time elapsed since starting of the vehicle, these control means switching the operation of the engine (1) to a richer mixture if this time interval is lower than a predetermined timing (s₃).

10. A device as claimed in claim 9, **characterised in that** it comprises means (19) for detecting when a position in which the foot is lifted from an accelerator pedal (12) controlling the engine (1) is reached and means for detecting a discontinuation of the injection of fuel into the engine, these control means (14) being sensitive to the detection of this position and this discontinuation in order to control the closure of a gas throttle valve (10) mounted upstream of the intake manifold of the engine (1).
